# EUROPEAN PATENT APPLICATION

(11) **EP 2 060 821 A1**
(43) Date of publication of application: **20.05.2009**
(21) Application number: 08169182.6
(22) Date of filing: 14.11.2008
(51) Int. Cl.: F16D 55/24, F16D 65/00

(54) **Aircraft brake and method with electromechanical actuator modules**

(30) Priority: 14.11.2007 US 987854 P
(71) Applicant: Goodrich Corporation, Charlotte, North Carolina 28217-4578 (US)
(72) Inventor: Corio, Lawrence F., Troy, OH 45373 (US)
(74) Representative: Hilleringmann, Jochen

(57) **Abstract**

An electrically actuated aircraft brake and method characterized by radial mount actuator modules (44) which can be easily and quickly replaced as a unit. Quick and easy replacement of the actuator modules (44) can be effected without disassembly of the overall brake and wheel assembly. Accordingly, brake manufacturing, repair costs, overhaul, parts stocking and maintenance costs and requirements are minimized and/or greatly simplified compared to integrated brake designs used in the prior art. Also, a malfunctioning actuator module on an aircraft can be replaced and preferably quickly enough to allow the aircraft to remain in scheduled service and/or with a minimum of downtime.

## Description

### FIELD OF THE INVENTION

The invention herein described relates generally to brakes and methods, more particularly to brakes and methods using electromechanical actuators, and still more particularly to electrically actuated aircraft brakes and methods.

### BACKGROUND OF THE INVENTION

Aircraft wheel and brakes heretofore have included a non-rotatable wheel support, a wheel rotatably mounted to the wheel support, and a brake disk stack having alternating rotor and stator disks mounted with respect to the wheel support and wheel for relative axial movement. Each rotor disk is coupled to the wheel for rotation therewith and each stator disk is coupled to the wheel support against rotation. A back plate is located at the rear end of the disk pack and a brake head is located at the front end. The brake head may house a plurality of actuator rams that extend to compress the brake disk stack against the back plate, Torque is taken out by the stator disks through a static torque tube or the like,

Electrically actuated aircraft brakes of various configurations are known, as exemplified by U.S. Patent Nos. 4,381,049, 4,432,440, 4,542,809 and 4,567,967. The brakes shown in these patents include electric motors which respond to an electrical control signal to effect rotation of a ring gear member which interacts through a plurality of balls to drive a linearly movable ram member into contacting engagement with a brake disk stack to effect compression thereof and braking of a wheel.

In U.S. Patent No. 4,596,316, another configuration of an electrically actuated brake uses a roller screw drive wherein a ring gear member interacts through a plurality of roller screws to drive a ram member into engagement with a brake pressure plate to effect compression of the brake disk stack for braking action. A plurality of electric motors and their associated pinions drive a ring gear into rotation and the plurality of roller screws effect linear axial movement of the ram member.

In U.S. Patent No. 4,865,162, a further electrically actuated aircraft brake employs a roller screw drive mechanism driven by an electric torque motor through a gear drive associated with either the screw or the nut of the roller screw drive mechanism. Rotation of the gear drive by the torque motor moves the other one of the screw or nut into axial engagement with a brake disk stack to compress the stack for braking. A plurality of the roller screw drive mechanisms and respective gear drives and torque motors are assembled in a brake head in a balanced arrangement about the axis of the wheel to apply and release a brake pressure force on the brake disk stack in response to an electrical control signal to the torque motors.

The repair or maintenance of these presently known brakes including torque motor driven rams heretofore has required significant disassembly of the brake. The complex integrated nature of prior art designs normally require substantial teardown of the assembly for maintenance, repair and/or overhaul of the assembly even if minor repair or only replacement of a single faulty component is required. Associated with extensive teardown is a lengthy reassembly and retest procedure to verify flight worthiness. Also, a highly integrated design and assembly with complex machining and assembly procedures is costly to process and manufacture. Distribution and parts stocking of individual components of such an assembly is similarly complex and inefficient as cam be appreciated by those knowledgeable in this area. Consequently, an aircraft, for example a commercial passenger aircraft, would most likely have to be taken out of scheduled service until a faulty actuator could be serviced. This results in lost revenue for the airline, scheduling adjustments, considerable inconvenience for customers, etc.

A design that overcomes many of the drawbacks of the aforementioned designs is set forth in commonly-owned U.S. Patent No. 6,095,293 which discloses an electromechanical actuator module for a braking system. The brake system includes a brake disk stack, a brake head, and at least one actuator module mounted to the brake head. The actuator module includes a module housing, a reciprocating ram and a motive device operatively connected to the reciprocating ram for selectively moving the reciprocating ram into and out of forceful engagement with the brake disk stack for applying and releasing braking force. The actuator module is mounted to a surface of the brake head that is parallel to a friction surface of the brake disk stack. While this mounting configuration is adequate for many applications, removal and/or installation of the modules on a brake head can be difficult especially in applications having limited space for movement of the module in an axial direction.

### SUMMARY OF THE INVENTION

The present invention provides a brake and method characterized by radial mount actuator modules each of which can be easily and quickly replaced as a unit. The radial mount actuators eliminate the need for a mounting surface parallel to the friction surface of the brake stack thereby reducing the overall weight of the brake. Further, the radial mount actuators enable quick and easy replacement of the actuator modules, preferably without requiring disassembly of the overall brake and wheel assembly, even in applications that have limited space axially adjacent to the brake. Also, it is conceivable that a malfunctioning actuator module could be replaced on an aircraft and tested with a minimum of equipment preferably quickly enough to allow the aircraft to remain in scheduled service and/or with a minimum of downtime, In addition, periodic maintenance of the brake can be done quicker and more efficiently by replacing the actuator modules with reconditioned and/or new actuator modules.

Accordingly, a brake comprises a brake disk stack, a brake head, and at least one actuator module mounted to the brake head, wherein the at least one actuator module can be removed radially from the brake head as a unit. The brake head can include at least one radial mount having a module mounting surface, and wherein the at least one actuator module is configured to mount radially to the radial mount. The radial mount can include one or more radially extending splines having a radially outer circumferential end face including the module mount surface. The at least one actuator module can be configured to mount radially to two radial mounts. The at least one actuator module can be secured to a circumferential surface of the brake head with at least one radially extending fastener that can be accessible from a radially outer side of the brake.

The brake head can include a recess or protrusion for mating with a corresponding recess or protrusion on the module. The at least one module can include an electrical connector for coupling with an electrical connector on the brake head for supplying electricity to the module, and the connectors can be configured to automatically couple when the at least one actuator module is mounted to the brake head. The actuator module can further include a module housing, a reciprocating ram and a motive device operatively connected to the reciprocating ram for selectively moving the reciprocating ram into and out of forceful engagement with the brake disk stack for applying and releasing braking force.

In accordance with another aspect, a method for servicing a brake including a brake disk stack and a brake head to which a plurality of actuator modules are removably mounted comprises the steps of identifying a brake module to be replaced, and radially removing and replacing the identified brake module with another brake module without disassembly of the brake disk stack.

In accordance with another aspect, a wheel and brake assembly comprises a rotatable wheel, a brake disk stack operatively connected to the wheel for applying and releasing braking torque on the rotatable wheel, a brake head, and a plurality of radial mount actuator modules. The plurality of actuator modules are removable as units from a radially outer side of the brake head. The plurality of actuator modules can be circumferentially equally spaced around a center axis of the brake head, and the brake head can include a plurality of circumferentially spaced apart radial mounts each having a module mounting surface. Each radial mount can include a radially extending spline having a radially outer circumferential end face including the module mount surface. Each actuator module can be configured to mount radially to two or more radial mounts. Each of the plurality of actuator modules can be secured to a circumferential surface of the brake head with at least one radially extending fastener which can be accessible from a radially outer side of the brake.

The brake head can include a plurality of recesses or protrusions for mating with corresponding recesses or protrusions on the plurality of actuator modules. Each actuator module can also include an electrical connector for coupling with an electrical connector on the brake head for supplying electricity to each respective actuator module. The electrical connectors can be configured to automatically couple when the actuator modules are mounted to the brake head. Each actuator module can further include a module housing, a reciprocating ram and a motive device operatively connected to the reciprocating ram for selectively moving the reciprocating ram into and out of forceful engagement with the brake disk stack for applying and releasing braking force.

According to another aspect, an actuator module for use in a wheel and brake assembly including a rotatable wheel, a brake disk stack operatively connected to the wheel for applying and releasing braking force on the rotatable wheel, and a brake head comprises a reciprocating ram, a motive device operatively connected to the reciprocating ram for selectively moving the reciprocating ram into and out of forceful engagement with the brake disk stack for applying and releasing braking force on the rotatable wheel, and a module housing in which the ram and motive device are carried and which is configured for removable radial attachment to the brake head. The actuator module is removably attachable radially as a unit to the brake head. The actuator module can further comprise an electrical connector for coupling with an electrical connector on the brake head for supplying electricity to the module. The actuator model can be securable to a circumferential surface of the brake head with at least one radially extending fastener which can be accessible from a radially outer side of the brake. The actuator module can further include a recess or protrusion for mating with a corresponding recess or protrusion on the brake head.

The foregoing and other features of the invention are hereinafter fully described and particularly pointed out in the claims, the following description and the annexed drawings setting forth in detail one or more illustrative embodiments of the invention, such being indicative, however, of but one or a few of the various ways in which the principles of the invention may be employed.

### BRIEF DESCRIPTION OF THE DRAWINGS

Fig. 1 is a cross-sectional view of an aircraft brake including plural actuator modules mounted to an axial end face of a brake head.
Fig. 2 is an axial end view of the actuator modules and brake head looking from the line 2-2 of Fig. 1, with one of the modules removed.
Fig. 3 is a cross-sectional view of an exemplary aircraft brake including plural radial mount actuator modules mounted to a brake head in accordance with the invention.
Fig. 4 is a partial perspective assembly view of the aircraft brake of Fig. 3 showing the brake head and an actuator module.
Fig. 5 is side view of the brake head and radial mount actuator module of Fig. 4 showing the actuator module mounted to the brake head.

### DETAILED DESCRIPTION OF THE INVENTION

Because the invention was conceived and developed for use in an aircraft braking system, it will be herein described chiefly in this context. However, the principles of the invention in their broader aspects can be adapted to other types of braking systems, such as in train brake systems.

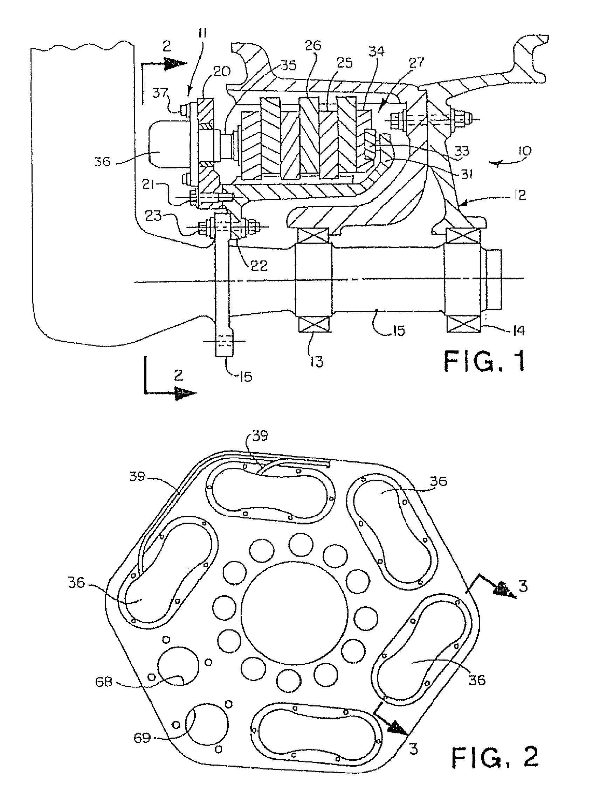

Referring now in detail to the drawings and initially to Fig. 1, a wheel and brake assembly having axial mount actuator modules is generally indicated at 10. The assembly 10 generally comprises a brake 11 and an aircraft wheel 12 which is supported for rotation by bearings 13 and 14 on an axle 15. The axle 15 forms a wheel mount and is attached to the end of an aircraft landing gear strut (not shown) or a truck attached to the end of a landing gear strut.

The brake 11 includes a brake head or housing 20 which is attached by bolt fasteners 21 to a torque tube 22 which in turn is attached by bolt fasteners 23 to a torque take-out flange on the axle 15. The illustrated brake head is a generally planar disk-like plate member having a bolt circle surrounding a central opening as best shown in Figs. 1 and 2.

The torque tube 22 is surrounded by stationary brake elements and rotary brake elements that are interleaved. The stationary and rotary brake elements are in the form of stator disks 25 and rotor disks 26, and the interleaved arrangement thereof is commonly referred to as a brake disk stack, the same being designated by reference numeral 27. The stator disks 25 are splined to the torque tube and the rotor disks 26 are splined to the wheel 12 interiorly of the wheel's rim. As is conventional, the splined connection may be effected by a plurality of spline or drive keys that are spaced around the circumference of the rim/torque tube to permit axial movement of the rotor/stator disks while being held to the wheel/torque tube against relative rotation.

The disk stack 27 is located between a back pressure member 31 and the brake head 20. The back pressure member 31 is formed by a radial flange at the outer end of the torque tube 22. The radial flange carries thereon a plurality of circumferentially spaced torque pucks 33 engaged with the last brake disk 34 at the rear end of the disk stack 27. The torque pucks 33 may be attached in a known manner to the radial flange 31 by several torque pucks which have the stems thereof loosely fitted in holes in the radial flange to permit some swiveling movement thereof. The torque pucks in the illustrated embodiment secure the last brake disk 34 against rotation relative to the torque tube. In a modified arrangement, the radial flange could be configured to engage directly the disk stack, and still other arrangements could be used.

Pressure is applied to the front end of the disk stack 27 by one or more disk engaging members such as the inboard ends of one or more actuator rams 35. The actuator rams 35 are included in respective actuator modules 36 mounted to the brake head 20 by removable bolt fasteners 37 or other suitable means enabling quick and easy attachment and detachment of the actuator modules to and from the brake head.

The actuator modules 36, being mounted to a surface of the brake head that is generally parallel to a surface of the brake disks 26, can be removed by first axially removing bolts 37 and then removing the actuator 36. As will be appreciated, some clearance will typically be needed axially adjacent the bolts 37 to permit installation and/or removal of the bolts 37. Further details of the wheel and brake assembly 10 can be found in commonly-owned U.S. Patent No. 6,095,293, which is hereby incorporated herein by reference in its entirety.

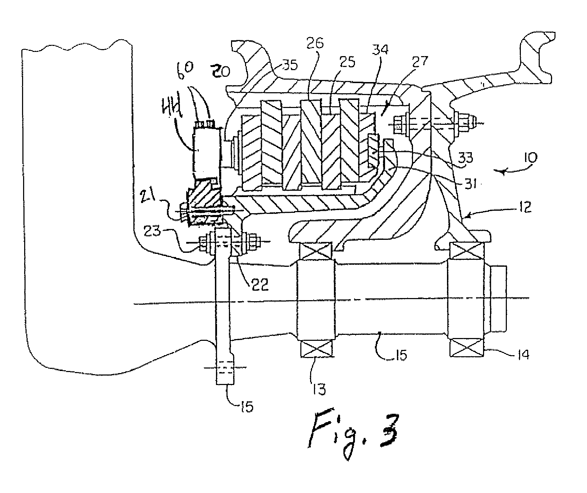

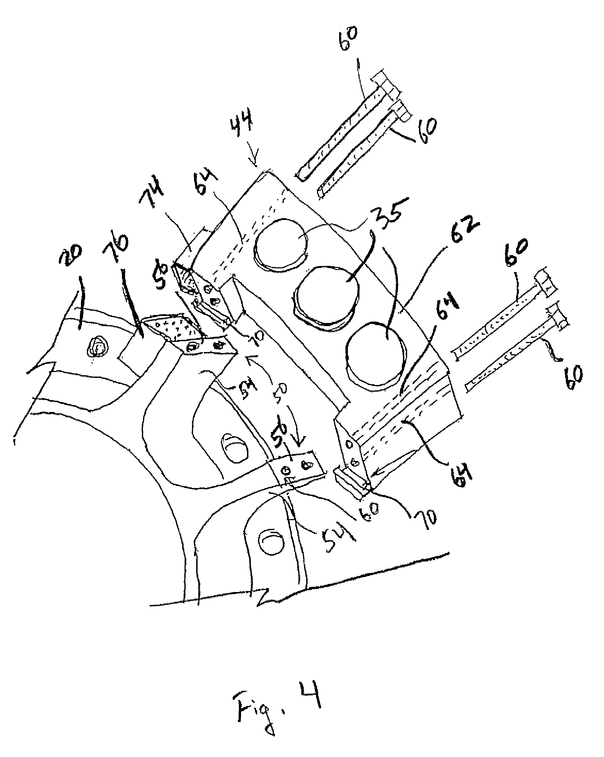

Turning now to Figs. 3-5, and initially to Fig. 3, a brake assembly in accordance with the invention is illustrated having actuator modules 44 radially mounted to the brake head 20 such that the actuator modules 44 can be removed and/or installed radially from the brake head 20 as a unit. The brake assembly is substantially similar to the brake assembly described in connection with Figs. 1 and 2 with the exception of the radial mount actuator modules 44.

The brake head 20 includes a plurality of circumferentially spaced-apart radial mounts 50 to which the actuator modules 44 are securable. Each radial mount 50 generally includes a radially extending spline 54 having a radially outer circumferential end face including a module mount surface 56. It will be appreciated that the end face need not be curved, and in fact can be flat or have any other suitable form. The mount surface 56 can include mounting holes 58 for receiving a fastener, such as a bolt 60, for securing the actuator module 44 to the brake head 20. Other fasteners can also be used, such as clamps, for example.

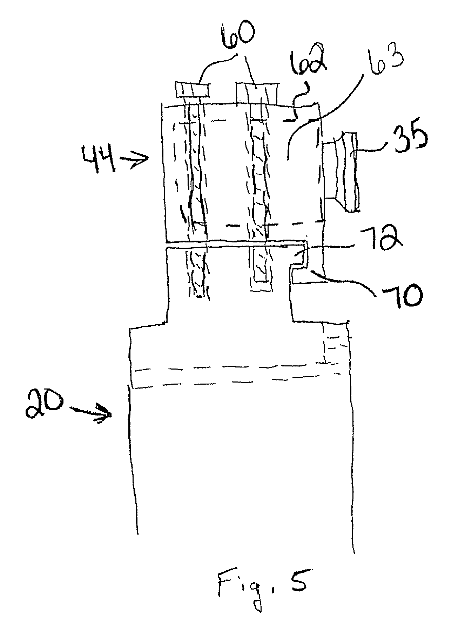

Each actuator module 44 includes a housing 62 for supporting one or more actuator rams 35 and motive devices 63 (Fig. 5) operatively connected to the reciprocating rams 35 for selectively moving the reciprocating ram 35 into and out of forceful engagement with the brake disk stack for applying and releasing braking force. The housing 62 further includes housing mounting holes 64 through which bolts 60 extend to secure the actuator module 44 to the brake head 20. As will be appreciated, bolts 60 generally extend radially towards a central axis of the brake head 20 and are accessible from a radially outer circumference of the brake. Thus, access to an end face of the brake head 20 is not necessary to install and/or remove an actuator module 44.

To facilitate alignment of the actuator modules 44 on the brake head 20 during assembly, the brake head 20 can include a recess or protrusion for mating with a corresponding recess or protrusion on each actuator module 44. In the illustrated embodiment, each actuator module 44 includes an undercut lip 70 configured to mate with a protrusion 72 on each radial mount 50. The undercut lip 70 can also facilitate load distribution during operation of the actuator modules 44. As will be appreciated, the recesses and protrusions can take a wide variety of forms.

The actuator modules 44 can also include an electrical connector 74 for coupling with an electrical connector 76 on the brake head 20 for supplying electricity to the actuator modules 44. The electrical connectors 74 and 76 can be configured such that a secure electrical connection is made when the actuator modules 44 are mounted to the brake head 20. Accordingly, a secure electrical connection can be made as part of the physical securement of the module 44 to the brake head 20. This feature can eliminate the need to electrically connect the actuator modules 44 in a separate step, and can provide a more secure connection than other methods.

It will now be appreciated that the actuator modules 44 can be removed from and/or installed on the brake head 20 from a radial direction. For example, the bolts 60 can be removed and/or installed from an outer circumference of the brake assembly and, thus, the actuator modules 44 can be removed and/or installed by shifting them radially inwardly/outwardly. This configuration eliminates or reduces the need for a module mounting surface parallel to a friction surface of the brake stack thereby tending to reduce the overall weight of the brake. Further, because the bolts 60 and actuator modules 44 can be installed and removed radially, the need for axial clearance adjacent to the brake head 20 is reduced.

In view of the foregoing, it will now be appreciated that there is provided a brake assembly that enables easy and quick replacement of a malfunctioning electromechanical actuator. No longer must a brake be substantially dissembled to repair a malfunctioning actuator or other actuator identified for repair and/or replacement. Instead, a malfunctioning actuator module 44 (or all of the actuator modules if the malfunctioning module can not be determined) can be removed radially from the brake head 20 simply by removing the fasteners 60 and withdrawing the module 44 radially from the brake head 20. This can be accomplished without having to disassemble the brake disk stack and potentially even with the wheel in place on the axle, as access usually can be gained in most wheel and brake assemblies to the radially outer side of the brake head. As described, to facilitate the easy removal and replacement of the actuator modules, the electrical connectors 74 and 76 can be configured to automatically electrically couple/decouple the actuator modules 44 during installation or removal of the actuator 44.

Although the invention has been illustrated in the context of a flange mounted type of brake, the principles of the invention may be applied to other types of brakes such as to a torque lug type of brake as will be appreciated by those skilled in the art.

Individual aspects of the invention are set out in the following lettered clauses:
A1. A brake comprising a brake disk stack, a brake head, and at least one actuator module mounted to the brake head, wherein the at least one actuator module can be removed radially from the brake head as a unit.
A2. A brake as set forth in clause A1, wherein the brake head includes at least one radial mount having a module mounting surface, and wherein the at least one actuator module is configured to mount radially to the radial mount.
A3. A brake as set forth in any preceding clause, wherein the radial mount includes a radially extending spline having a radially outer circumferential end face including the module mount surface.
A4. A brake as set forth in any preceding clause, wherein the brake head includes a plurality of radial mounts each having a module mounting surfaces, and wherein the at least one actuator module is configured to mount radially to two radial mounts.
A5. A brake as set forth in any preceding clause, wherein the at least one actuator module is secured to a circumferential surface of the brake head with at least one radially extending fastener.
A6. A brake as set forth in any preceding clause, wherein the at least one radially extending fastener is accessible from a radially outer side of the brake.
A7. A brake as set forth in any preceding clause, wherein the brake head includes a recess or protrusion for mating with a corresponding recess or protrusion on the module.
A8. A brake as set forth in any preceding clause, wherein the at least one module includes an electrical connector for coupling with an electrical connector on the brake head for supplying electricity to the module.
A9. A brake as set forth in any preceding clause, wherein the electrical connector of the module and the electrical connector on the brake head are configured to automatically couple when the at least one actuator module is mounted to the brake head.
A10. A brake as set forth in any preceding clause, wherein the module includes a module housing, a reciprocating ram and a motive device operatively connected to the reciprocating ram for selectively moving the reciprocating ram into and out of forceful engagement with the brake disk stack for applying and releasing braking force.
A11. A brake as set forth in any preceding clause, in combination with an aircraft wheel assembly.
A12. A method for servicing a brake including a brake disk stack and a brake head to which a plurality of actuator modules are removably mounted, the method comprising the steps of identifying a brake module to be replaced, and radially removing and replacing the identified brake module with another brake module without disassembly of the brake disk stack.
B13. A wheel and brake assembly comprising:
   a rotatable wheel;
   a brake disk stack operatively connected to the wheel for applying and releasing braking torque on the rotatable wheel;
   a brake head; and
   a plurality of radial mount actuator modules;
   wherein the plurality of actuator modules are removable as units from a radially outer side of the brake head.
B14. A wheel and brake assembly as set forth in clause B13, wherein the plurality of actuator modules are circumferentially equally spaced around a center axis of the brake head.
B15. A wheel and brake assembly as set forth in any one of clauses B13-B14, wherein the brake head includes a plurality of circumferentially spaced apart radial mounts each having a module mounting surface, and wherein the plurality of actuator modules are configured to mount radially to the radial mounts.
B16. A wheel and brake assembly as set forth in any one of clauses B13-B15, wherein each radial mount includes a radially extending spline having a radially outer circumferential end face including the module mount surface.
B17. A wheel and brake assembly as set forth in any one of clauses B13-B16, wherein each actuator module is configured to mount radially to two radial mounts.
B18. A wheel and brake assembly as set forth in any one of clauses B13-B17, wherein each of the plurality of actuator modules are secured to a circumferential surface of the brake head with at least one radially extending fastener.
B19. A wheel and brake assembly as set forth in any one of clauses B13-B18, wherein the at least one radially extending fastener is accessible from a radially outer side of the brake.
B20. A wheel and brake assembly as set forth in any one of clauses B13-B19, wherein the brake head includes a plurality of recesses or protrusions for mating with corresponding recesses or protrusions on the plurality of actuator modules.
B21. A wheel and brake assembly as set forth in any one of clauses B13-B20, wherein the plurality of actuator modules each include an electrical connector for coupling with an electrical connector on the brake head for supplying electricity to each respective actuator module.
B22. A wheel and brake assembly as set forth in any one of clauses B13-B21, wherein the electrical connectors of the actuator modules and the electrical connectors on the brake head are configured to automatically couple when the actuator modules are mounted to the brake head.
B23. A wheel and brake assembly as set forth in any one of clauses B13-B22, wherein each actuator module includes a module housing, a reciprocating ram and a motive device operatively connected to the reciprocating ram for selectively moving the reciprocating ram into and out of forceful engagement with the brake disk stack for applying and releasing braking force.
C24. An actuator module for use in a wheel and brake assembly including a rotatable wheel, a brake disk stack operatively connected to the wheel for applying and releasing braking force on the rotatable wheel, and a brake head; said actuator module comprising a reciprocating ram, a motive device operatively connected to the reciprocating ram for selectively moving the reciprocating ram into and out of forceful engagement with the brake disk stack for applying and releasing braking force on the rotatable wheel, and a module housing in which the ram and motive device are carried and which is configured for removable radial attachment to the brake head, wherein the actuator module is removably attachable radially as a unit to the brake head.
C25. An actuator module as set forth in clause C24, further comprising an electrical connector for coupling with an electrical connector on the brake head for supplying electricity to the module.
C26. An actuator module as set forth in any one of clauses C24-C25, wherein the actuator model is securable to a circumferential surface of the brake head with at least one radially extending fastener.
C27. An actuator module as set forth in any one of clauses C24-C26, wherein the at least one radially extending fastener is accessible from a radially outer side of the brake.
C28. An actuator module as set forth in any one of clauses C24-C27, wherein the actuator module includes a recess or protrusion for mating with a corresponding recess or protrusion on the brake head.
C29. A brake assembly including a brake disk stack, a brake head, and at least one actuator module as set forth in any one of clauses C24-C28 mounted to the brake head.

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described integers (components, assemblies, devices, compositions, etc.), the terms (including a reference to a "means") used to describe such integers are intended to correspond, unless otherwise indicated, to any integer which performs the specified function of the described integer (i.e., that is functionally equivalent), even though not structurally equivalent to the disclosed structure which performs the function in the herein illustrated exemplary embodiment or embodiments of the invention. In addition, while a particular feature of the invention may have been described above with respect to only one of several illustrated embodiments, such feature may be combined with one or more other features of the other embodiments, as may be desired and advantageous for any given or particular application.

In addition, the invention is considered to reside in all workable combinations of features herein disclosed, whether initially claimed in combination or not and whether or not disclosed in the same embodiment.

## Claims

1. A brake comprising a brake disk stack, a brake head, and at least one actuator module mounted to the brake head, wherein the at least one actuator module can be removed radially from the brake head as a unit.

2. A brake as set forth in claim 1, wherein the brake head includes at least one radial mount having a module mounting surface, and wherein the at least one actuator module is configured to mount radially to the radial mount.

3. A brake as set forth in any preceding claim, wherein the radial mount includes a radially extending spline having a radially outer circumferential end face including the module mount surface.

4. A brake as set forth in any preceding claim, wherein the brake head includes a plurality of radial mounts each having a module mounting surfaces, and wherein the at least one actuator module is configured to mount radially to two radial mounts.

5. A brake as set forth in any preceding claim, wherein the at least one actuator module is secured to a circumferential surface of the brake head with at least one radially extending fastener that preferably is accessible from a radially outer side of the brake.

6. A brake as set forth in any preceding claim, wherein the brake head includes a recess or protrusion for mating with a corresponding recess or protrusion on the module.

7. A brake as set forth in any preceding claim, wherein the at least one module includes an electrical connector for coupling with an electrical connector on the brake head for supplying electricity to the module, and the electrical connector of the module and the electrical connector on the brake head preferably are configured to automatically couple when the at least one actuator module is mounted to the brake head.

8. A brake as set forth in any preceding claim, wherein the module includes a module housing, a reciprocating ram and a motive device operatively connected to the reciprocating ram for selectively moving the reciprocating ram into and out of forceful engagement with the brake disk stack for applying and releasing braking force.

9. A brake as set forth in any preceding claim, in combination with an aircraft wheel assembly.

10. A method for servicing a brake including a brake disk stack and a brake head to which a plurality of actuator modules are removably mounted, the method comprising the steps of identifying a brake module to be replaced, and radially removing and replacing the identified brake module with another brake module without disassembly of the brake disk stack.

11. A wheel and brake assembly comprising:
a rotatable wheel;
a brake disk stack operatively connected to the wheel for applying and releasing braking torque on the rotatable wheel;
a brake head; and
a plurality of radial mount actuator modules;
wherein the plurality of actuator modules are removable as units from a radially outer side of the brake head.

12. An actuator module for use in a wheel and brake assembly including a rotatable wheel, a brake disk stack operatively connected to the wheel for applying and releasing braking force on the rotatable wheel, and a brake head; said actuator module comprising a reciprocating ram, a motive device operatively connected to the reciprocating ram for selectively moving the reciprocating ram into and out of forceful engagement with the brake disk stack for applying and releasing braking force on the rotatable wheel, and a module housing in which the ram and motive device are carried and which is configured for removable radial attachment to the brake head, wherein the actuator module is removably attachable radially as a unit to the brake head.

13. An actuator module as set forth in claim 12, wherein the actuator model is securable to a circumferential surface of the brake head with at least one radially extending fastener.

14. A brake assembly including a brake disk stack, a brake head, and at least one actuator module as set forth in any one of claims 12-13 mounted to the brake head.
